# EUROPEAN PATENT APPLICATION

(11) **EP 4 706 369 A1**
(43) Date of publication of application: **11.03.2026**
(21) Application number: 25197078.6
(22) Date of filing: 20.08.2025
(51) Int. Cl.: A01D 34/63, A01D 34/73, B26D 1/00, C22C 29/00, C22C 29/08, C22C 38/00

(54) **SELF-SHARPENING MOWER BLADE**

(30) Priority: 22.08.2024 US 202463685769 P
(71) Applicant: Techtronic Cordless GP, Anderson, SC 29621 (US)
(72) Inventor: WALLS III, Kenneth Cline, Anderson, 29621 (US); TAYLOR, Christian Alan, Anderson, 29621 (US); SELMAN, Corey Adam, Anderson, 29621 (US); CHO, Honggun, Anderson, 29621 (US); KIANI, Mahdi, Anderson, 29621 (US); YANY III, Martin Joseph, Anderson, 29621 (US); ALARCON, Jeremy, Anderson, 29621 (US); SINGH, Dhruv, Anderson, 29621 (US); CRAVEN, Jordan Shane, Anderson, 29621 (US); CHAPMAN, Seth, Anderson, 29621 (US)
(74) Representative: Zimmermann & Partner Patentanwälte mbB

(57) **Abstract**

A rotary cutting implement and a lawnmower are provided. The rotary cutting implement includes an elongated body rotatable about an axis. The elongated body comprises a base metal and has at least one cutting edge. The cutting edge comprises an edge surface extending from a first surface of the elongated body to a second surface of the elongated body. The cutting edge further comprises a reinforcing layer adjacent to the second surface of the elongated body. The reinforcing layer is formed from a reinforcing composition comprising one or more reinforcement particles in an amount of 10 vol.% or more and a binder metal composition wherein a hardness differential between the one or more reinforcement particles and the base metal is 1600 HV or more. A lawnmower may include the aforementioned rotary cutting implement.

## Description

### CROSS-REFERENCE TO RELATED APPLICATIONS

The present application claims priority to U.S. Provisional Patent Application No. 63/685,769, filed on August 22, 2024, the disclosure of which is incorporated by reference herein in its entirety.

### FIELD

The present disclosure relates generally to lawn mowers, and more particularly to blades for lawn mowers.

### BACKGROUND

Lawn mowers are generally utilized in grass cutting operations. Typically, lawn mowers utilize one or more rotating blades with sharpened edges to cut grass. However, as a result of repeated use, the edges of the blades wear and become less sharp, and the apparatus becomes less efficient and effective in cutting agricultural material. The blade must be periodically sharpened while attached to the apparatus or even removed from the mower and sharpened. After a period of use, the blade must be replaced. These re-sharpening and/or replacement operations result in costly device downtime and increased cost.

Additionally, during operation of the lawnmower, the cutting blades may hit hard objects such as rocks on the lawn. The impact between the object and the blade causes wear of the blade edges and may, due to the relatively high rotational speed of the blade, also result in the formation of cracks of the blade or chipping thereof. Damage to the cutting blades may result in impaired cutting quality of the lawn and increased operational cost of the lawnmower.

Accordingly, improved lawn mowers and mower blades are desired in the art. In particular, a lawn mower blade which provides self-sharpening or reduced dulling of the blade would be advantageous.

### BRIEF DESCRIPTION

Aspects and advantages of the present disclosure will be set forth in part in the following description, or may be obvious from the description, or may be learned through practice of the technology.

In accordance with one embodiment, a rotary cutting implement is provided. The rotary cutting implement includes an elongated body rotatable about an axis. The elongated body comprises a base metal and has at least one cutting edge. The cutting edge comprises an edge surface extending from a first surface of the elongated body to a second surface of the elongated body. The cutting edge further comprises a reinforcing layer adjacent to the second surface of the elongated body. The reinforcing layer is formed from a reinforcing composition comprising one or more reinforcement particles in an amount of 10 vol.% or more and a binder metal composition wherein a hardness differential between the one or more reinforcement particles and the base metal is 1600 HV or more.

In accordance with another embodiment, a lawnmower is provided. The lawnmower comprises a mower deck, a power source coupled to the mower deck, a motor selectively powered by the power source, a drive shaft coupled to the motor and defining an axis of rotation, and a blade assembly operatively coupled to the drive shaft. The blade assembly comprises a base and a blade coupled with the base. The blade comprises an elongated body rotatable about the axis of rotation. The elongated body comprises a base metal and has at least one cutting edge extending between a first surface of the elongated body and a second surface of the elongated body. The cutting edge further comprises a reinforcing layer adjacent to the second surface of the elongated body. The reinforcing layer is formed from a reinforcing composition comprising one or more reinforcement particles in an amount of 10 vol.% or more and a binder metal composition wherein a hardness differential between the one or more reinforcement particles and the base metal is 1600 HV or more.

These and other features, aspects and advantages of the present disclosure will become better understood with reference to the following description and appended claims. The accompanying drawings, which are incorporated in and constitute a part of this specification, illustrate embodiments of the technology and, together with the description, serve to explain the principles of the technology.

### BRIEF DESCRIPTION OF THE DRAWINGS

A full and enabling disclosure of the present application, including the best mode of making and using the present systems and methods, directed to one of ordinary skill in the art, is set forth in the specification, which makes reference to the appended figures, in which:
FIG. 1 is a perspective view of an exemplary lawn mower in accordance with embodiments of the present disclosure;
FIG. 2 is a perspective view of a blade assembly with the blade coupled to a drive shaft in accordance with embodiments of the present disclosure;
FIG. 3 is a perspective view of the blade assembly with the blade decoupled from the drive shaft in accordance with embodiments of the present disclosure;
FIG. 4 is a perspective view of a blade in accordance with embodiments of the present disclosure;
FIG. 5 is a side view of a blade in accordance with embodiments of the present disclosure;
FIG. 6 is an end view of a blade in accordance with embodiments of the present disclosure;
FIG. 7 is a bottom view of a blade in accordance with embodiments of the present disclosure; and
FIG. 8 is a top view of a blade in accordance with embodiments of the present disclosure.

### DETAILED DESCRIPTION

Reference now will be made in detail to embodiments of the present disclosure, one or more examples of which are illustrated in the drawings. The word "exemplary" is used herein to mean "serving as an example, instance, or illustration." Any implementation described herein as "exemplary" is not necessarily to be construed as preferred or advantageous over other implementations. Moreover, each example is provided by way of explanation, rather than limitation of, the technology. In fact, it will be apparent to those skilled in the art that modifications and variations can be made in the present technology without departing from the scope or spirit of the claimed technology. For instance, features illustrated or described as part of one embodiment can be used with another embodiment to yield a still further embodiment. Thus, it is intended that the present disclosure covers such modifications and variations as come within the scope of the appended claims and their equivalents. The detailed description uses numerical and letter designations to refer to features in the drawings. Like or similar designations in the drawings and description have been used to refer to like or similar parts of the disclosure.

As used herein, the terms "first", "second", and "third" may be used interchangeably to distinguish one component from another and are not intended to signify location or importance of the individual components. The singular forms "a," "an," and "the" include plural references unless the context clearly dictates otherwise. The terms "coupled," "fixed," "attached to," and the like refer to both direct coupling, fixing, or attaching, as well as indirect coupling, fixing, or attaching through one or more intermediate components or features, unless otherwise specified herein. As used herein, the terms "comprises," "comprising," "includes," "including," "has," "having" or any other variation thereof, are intended to cover a non-exclusive inclusion. For example, a process, method, article, or apparatus that comprises a list of features is not necessarily limited only to those features but may include other features not expressly listed or inherent to such process, method, article, or apparatus. Further, unless expressly stated to the contrary, "or" refers to an inclusive- or and not to an exclusive- or. For example, a condition A or B is satisfied by any one of the following: A is true (or present) and B is false (or not present), A is false (or not present) and B is true (or present), and both A and B are true (or present).

Terms of approximation, such as "about," "generally," "approximately," or "substantially," include values within ten percent greater or less than the stated value. When used in the context of an angle or direction, such terms include within ten percent greater or less than the stated angle or direction. For example, "generally vertical" includes directions within ten degrees of vertical in any direction, e.g., clockwise or counter-clockwise.

Benefits, other advantages, and solutions to problems are described below with regard to specific embodiments. However, the benefits, advantages, solutions to problems, and any feature(s) that may cause any benefit, advantage, or solution to occur or become more pronounced are not to be construed as a critical, required, or essential feature of any or all the claims.

In general, the present disclosure is directed to a rotary cutting implement comprising an elongated body rotatable about an axis and having at least one cutting edge. The rotary cutting implement, such as a blade, may be formed from a base metal. In addition, the cutting edge comprises a reinforcing layer adjacent to the second surface of the elongated body wherein the reinforcing layer is provided on the base metal. The reinforcing layer is formed from a reinforcing composition comprising one or more reinforcement particles and a binder metal composition.

The present inventors have discovered that by utilizing a particular combination of materials having certain properties for a reinforcing layer to be provided onto a base metal for forming a rotary cutting implement, such as a blade, as described herein, the rotary cutting implement may demonstrate a desired self-sharpening effect. For instance, the materials may not only provide a desired bond or deposition onto the base metal, but they may also provide a desired hardness and/or toughness for use as a part of a rotary cutting implement, such as a blade, as described herein. In this regard, as the base metal may become ineffective (e.g., dull) over time due to continued use, the reinforcing layer containing the materials and exhibiting the properties as disclosed herein may emerge to provide a new cutting edge.

In addition, by utilizing the materials for the reinforcing layer as described herein, the rotary cutting implement may have a cutting edge with a desired edge radius after a wear test. In general, the lower the edge radius after conclusion of the wear test, the better the self-sharpening effect of the reinforcing layer. In this regard, the rotary cutting implement, in particular the reinforcing layer, may exhibit an edge radius of 400 mm or less, such as 380 mm or less, such as 360 mm or less, such as 340 mm or less, such as 320 mm or less, such as 300 mm or less, such as 280 mm or less, such as 260 mm or less, such as 240 mm or less, such as 220 mm or less, such as 200 mm or less, such as 180 mm or less, such as 160 mm or less, such as 150 mm or less, such as 140 mm or less, such as 130 mm or less. The edge radius may be 10 mm or more, such as 20 mm or more, such as 30 mm or more, such as 40 mm or more, such as 50 mm or more, such as 60 mm or more, such as 70 mm or more, such as 80 mm or more, such as 90 mm or more, such as 100 mm or more, such as 110 mm or more, such as 120 mm or more, such as 130 mm or more, such as 140 mm or more, such as 150 mm or more, such as 160 mm or more, such as 180 mm or more, such as 200 mm or more, such as 220 mm or more, such as 240 mm or more, such as 260 mm or more, such as 280 mm or more, such as 300 mm or more. The wear test may be conducted for 20 minutes. The wear test may be conducted using means generally known in the art for determining the wear of a cutting implement, such as by testing the cutting implement in sand.

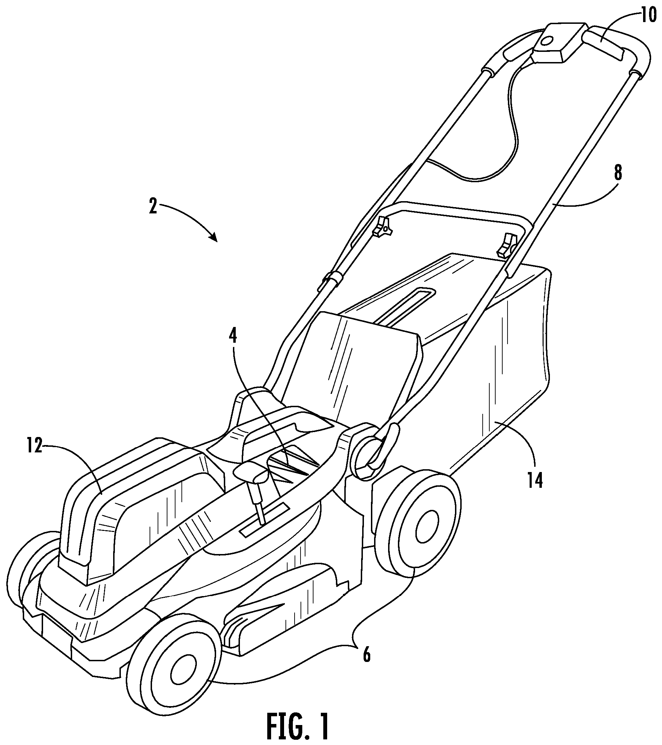

Referring now to the drawings, FIG. 1 illustrates an exemplary view of a lawnmower 2 in accordance with an exemplary embodiment of the present disclosure. The lawnmower 2 generally includes a mower deck 4 and a plurality of wheels 6 coupled to the mower deck 4. The wheels 6 may be driven, e.g., by a motor of the lawnmower 2, or be self-propelled, e.g., pushed by an operator.

The lawnmower 2 further includes a handle 8 extending from the mower deck 4. The handle 8 can include one or more user interfaces 10 which allow the operator to control one or more controllable elements of the lawnmower 2. For instance, the user interface(s) 10 may engage a motor (not illustrated) which is coupled to and drives the rotatable blade. The handle 8 can be adjustable such that the operator can adjust a relative height of the handle 8 to accommodate operators of different heights. The handle 8 may further be rotatable between a plurality of operating or storage configurations.

A power source 12 can be coupled to the mower deck 4. In an embodiment, the power source 12 can include an energy storage unit, such as a battery. In another embodiment, the power source 12 can include a gas engine. In yet another embodiment, the power source 12 can include a plug or cable configured to be coupled to an external power source, e.g., a wall outlet.

The power source 12 may be configured to drive a motor of the lawnmower 2. As described in greater detail hereinafter, the motor may be configured to rotatably drive a drive shaft defining an axis of rotation. A quick release blade assembly can be operatively coupled to the drive shaft and configured to detachably couple a blade to the drive shaft. Additionally or alternatively, other attachment methods to attach the blade to the drive shaft may be implemented, including but not limited to bolting the blade directly to the drive shaft with or without additional elements such as spacers and adapters.

The lawnmower 2 can include a bag 14 for clippings ejected from a cutting area formed by the mower deck 4. In an embodiment, the bag 14 can be disposed behind the mower deck 4 underneath the handle 8.

Other types of lawnmowers are contemplated herein without departing from the scope of the disclosure. For example, the lawnmower can include a riding lawnmower having a platform for the operator to stand on or a seat for the operator to sit during use. In certain instances, the lawnmower can include a single blade. In other instances, the lawnmower can include two or more blades, such as two blades, three blades, or four blades.

The lawnmower may be configured to detect when the operator is removing one or more of the blade(s) and prevent the motor from rotatably driving the blades. By way of non-limiting example, the lawnmower may detect an angle of the mower deck 4 and prevent rotation of the blade(s) when the mower deck 4 exceeds a prescribed angle. Alternatively, the lawnmower can have a kill switch or other interface enabling the operator to prevent power supply to the motor.

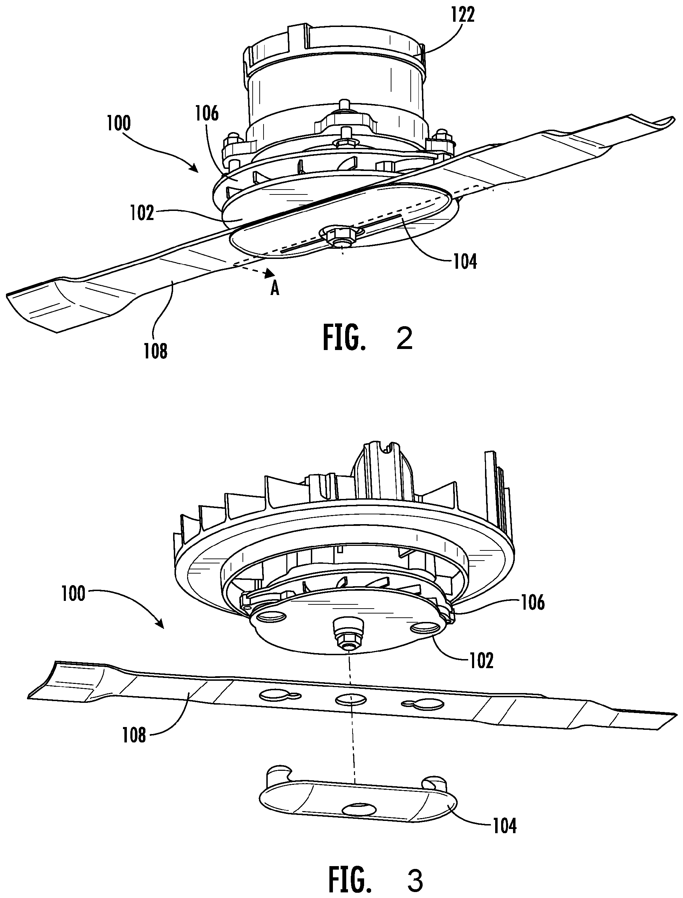

FIG. 2 illustrates a perspective view of a blade assembly 100 in accordance with an exemplary embodiment. FIG. 3 illustrates an embodiment of the blade assembly 100 with the blade and retainer 104 detached, e.g., such that the blade 108 can be replaced or serviced. The blade assembly 100 generally may include a base 102, a retainer 104, an actuatable member 106, and a blade 108. The components of the blade assembly 100 can selectively couple the blade 108 to the lawnmower 2 and selectively uncouple the blade 108 from the lawnmower 2.

The blade 108 may include an elongated member 110 defining one or more cutting edges 112. In an embodiment, the one or more cutting edges 112 can be disposed at, or adjacent to, opposite ends of the elongated member 110. The cutting edges 112 may be rotationally symmetrical about a central axis 20 of the blade assembly 100. As the elongated member 110 rotates about the central axis 20, the cutting edges 112 can cut grass, or other materials.

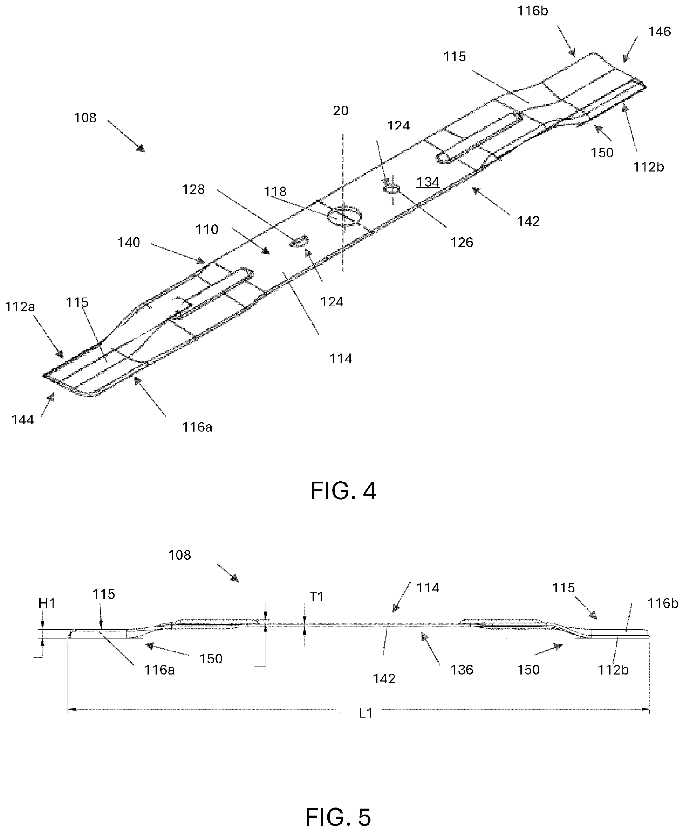

In particular, as illustrated in at least FIG. 4, the elongated member 110 includes a first elongated side 140 and a second elongated side 142 opposite the first elongated side 140. The first and second elongated sides 140, 142 each extend between a first end 144 and a second end 146. The elongated member 110 may have a length L1 (FIG. 5) from the first end 144 to the second end 146 in a range from about 30 cm to about 60 cm, such as from about 45 cm to about 55 cm. In some aspects of the present invention, the length L1 may be about 33 cm, about 38 cm, about 48 cm, about 53 cm. The elongated member 110 may further have a width W1 from the first side 140 to the second side 142 in a range from about 48 mm to about 52 mm.

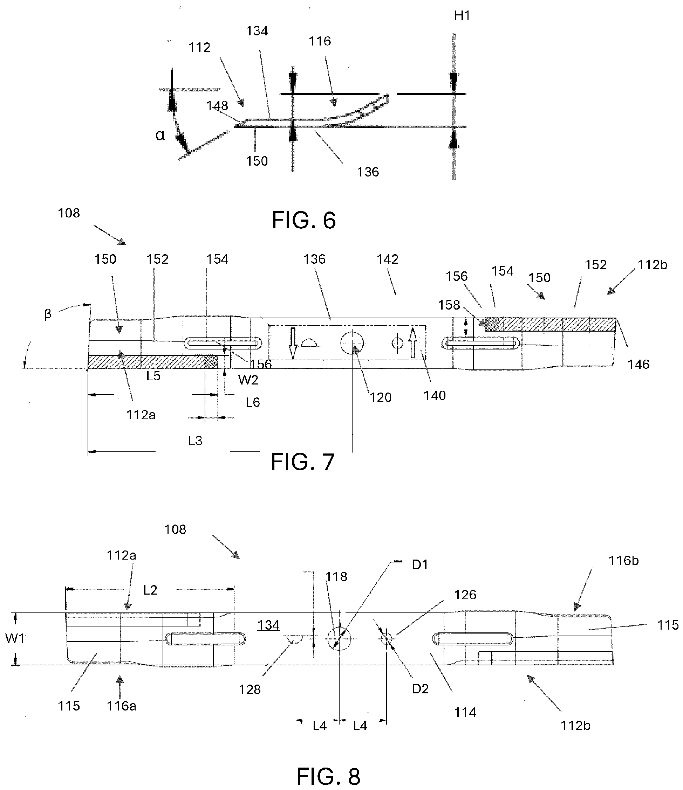

In some aspects, e.g., as illustrated in FIGS. 7 and 8, the first end 144 and/or the second end 146 may extend at an angle β relative to the first side 140 and/or second side 142. For instance, the angle β may be a non-perpendicular angle, as shown in FIGS. 7 and 8, or alternatively, the angle β may be a perpendicular (i.e., 90 degree) angle. As illustrated in FIG. 7, the angle β may be in a range from about 85 degrees to about 100 degrees.

A central opening 118 (FIG. 4) may extend through the blade 108 and receive a portion of a drive shaft (not shown) which extends from, or is coupled to, a drive motor 122 (FIG. 3). The opening 118 may additionally receive a bolt coupled to the drive shaft which secures the base 102 to the drive shaft. The central opening 118 may have a diameter D1 (FIG. 8) in a range from about 20 mm to about 25 mm. The central opening 118 may have a center point 120 (FIG. 7) disposed at a center point between the first side 140 and second side 142, and a center point between the first end 144 and the second end 146. A distance L3 (FIG. 7) may extend from the center point 120 and the first end 144, and an equal distance L3 may extend from the center point 120 to the second end 146. The distance L3 may be in a range from about 175 mm to about 350 mm.

The blade 108 can further include one or more openings 124 spaced apart from the central axis 20, i.e., displaced from a central location of the blade 108. The openings 124 may include one opening, two openings, three openings, four openings, or the like. In the illustrated embodiment, the openings 124 include up to openings 124, which may include pairs of openings 124 equally spaced apart from the central axis 20. The openings 124 may, for instance, include a first circular opening 126 and a second opening 128 equally spaced apart from the central axis 20, e.g., by a distance L4, as shown in FIG. 8. The second opening 128 may have a circular shape similar to the first circular opening 126, or may have an alternative shape, such as a semi-circular opening 128 as shown in FIG. 4 and FIG. 8. The first circular opening 126 may have a diameter D2 in a range from about 10 mm to about 11 mm. The semi-circular opening 128 may have a radius in a range from about 7 mm to about 8 mm. In some aspects, the straight edge of the semi-circular opening 128 may be parallel to a center longitudinal axis of the opening 118. For instance, the straight edge of the semi-circular opening 128 may be parallel to a center longitudinal axis of the opening 118 and spaced apart therefrom by a distance of up to about 4 mm. In yet another embodiment, the openings 124 can have non-circular shapes, including, e.g., one or more arcuate portions or one or more linear portions. In certain instances, the openings 124 can be disposed along the blade 108 such that the openings 124 are rotationally symmetrical about the central axis 20.

The blade 108 can be disposed between (e.g., sandwiched between) the base 102 and the retainer 104 such that a first surface 134 of the blade 108 is disposed adjacent to the base 102 and a second surface 136 (see FIG. 5 and 6) of the blade 108 is disposed adjacent to the retainer 104. In certain instances, the blade 108 can directly contact one or both of the base 102 or retainer 104. In other instances, the blade 108 can be spaced apart from either or both of the base 102 or retainer 104, e.g., by a dampener or other intermediary element. In some embodiments, more than one blade 108 may be coupled to a motor shaft of a mower, such as by being stacked, including offset from one another.

In some aspects of the disclosure, the openings 124 may facilitate coupling between the blade 108 and the retainer 104. For instance, the retainer 104 may include one or more coupling elements configured to be inserted into the openings. In some aspects, a coupling element may have a same or similar shape as a shape of one of the openings 124. For example, a first coupling element may have a same shape and size as the first circular opening 126 so as to be insertable into the first circular opening 126. A second coupling element may have a same shape and size as the second opening 128, e.g., a semi-circular shape. In this manner, the respective shapes of the openings 124 and coupling elements of the retainer 104 may require that the retainer 104 be installed onto the blade 108 in only a single orientation. In this arrangement, the respective shapes of the openings 124 and coupling elements of the retainer 104 form a poke-yoke feature configured to prevent misconnection or improper assembly of the blade 108 and retainer 104 in the blade assembly 100.

Referring still to FIG. 4, in an embodiment, the blade 108 can generally extend along a plane and include one or more flared portions 116 which may increase cutting efficiency of the lawnmower 2 by affecting the material being cut. In the illustrated embodiment shown in FIG. 5, a central portion 114 of the blade 108 is generally planar, and outer portions 115 of the blade 108 extend slightly downward from the plane of the central portion 114. The central portion 114 may have a thickness T1 extending from the first surface 134 to the second surface 136 in a range from about 2 mm to about 4 mm, e.g., such as from about 2.3 mm to about 2.7 mm. In the illustrated embodiment, the outer portions 115 of blade 108 may include two flared portions 116 disposed at opposite ends of the elongated member 110 opposite the cutting edges 112. As shown in FIG. 5, the flared portions 116 may extend upward at a height H1 in a range from about 6 mm to about 10 mm, such as from about 7 mm to about 9 mm.

As described above, the blade 108 includes cutting edges 112. For instance, at least a portion of the cutting edges 112 may be disposed in the outer portions 115 of the blade. For instance, the cutting edges 112 may each extend along the length of the respective outer portions 115 and along a portion of a length of the central portion 114, as shown in FIG. 4 and FIG. 8.

A first cutting edge 112a may be disposed along the first elongated side 140 adjacent to the first end 144, and a second cutting edge 112b may be disposed along the second elongated side 142 adjacent to the second end 146. Similarly, a first flared portion 116a may be disposed along the second elongated side 142 adjacent to the first end 144, opposite the first end 144 from the first cutting edge 112a. A second flared portion 116b may be disposed along the first elongated side 140 adjacent to the second end 146, opposite the second end 146 from the second cutting edge 112b. Each of the cutting edges 112 may have a length L2 (FIG. 8) in a range from about 120 mm to about 180 mm. In some aspects, the length L2 of the cutting edges 112 may be a minimum of about 150 mm. In some aspects, a ratio of the length L1 of the blade 108 to the length L2 of a cutting edge 112 may be in a range from about 2.5:1 to 4.5:1, such as from about 2.75:1 to about 3.5:1.

As best seen in FIGS. 5 and 6, the cutting edges 112 may extend from the first surface 134 to the second surface 136 of the elongated member 110 along an edge surface 148. In some aspects, the edge surface 148 may extend at a non-perpendicular angle relative to the first surface 134 to the second surface 136. For instance, an acute angle α may be formed between the second surface 136 and the cutting edge 112. The angle α may be in a range from about 25 degrees to about 35 degrees. An angle (not shown) between the edge surface 148 and the first surface 134 may be supplementary to the angle α.

The cutting edges 112 include a reinforcing layer 150. The reinforcing layer 150 is disposed adjacent to the second surface 136 of the blade 108, as best seen in the bottom view of the blade 108 shown in FIG. 7. The reinforcing layer 150 may extend a length L5 in a range from about 100 mm to about 150 mm, such as from about 120 mm to about 135 mm. In some aspects of the present disclosure, a ratio of the length L5 of the reinforcing layer 150 to the length L2 of the cutting edge 112 may be in a range from about 1:1 to about 1:2, such as a ratio of about 1:1.5, e.g., a range of about 1:1.2. The reinforcing layer 150 may extend a width W2 from the respective first side 140 or second side 142 toward a center of the blade 108. The width W2 may be in a range from about 10 mm to about 15 mm, such as from about 11.5 mm to about 14 mm. A ratio of the width W2 of the reinforcing layer 150 to the width W1 of the blade 108 may be in a range from about 1:3 to about 1:6, such as a ratio of about 1:5.

The reinforcing layer 150 may have a thickness of about 1 mm ± 0.2 mm in the crosshatch area 152. A terminal section 154 of the reinforcing layer 150, depicted in FIG. 7 in double crosshatch, may have a thickness tapering from a maximum thickness adjacent to the area 152, e.g., about 1 mm ± 0.2 mm, to 0 mm at the inner end 158. The terminal section 154 may have a length L6 in a range from about 10 mm to about 15 mm. In some aspects, the terminal section 154 may be generally square shaped.

The rotary cutting implement, such as blade 108, can be formed from a base metal. Such base metal may not necessarily be limited by the present disclosure and may be any as generally utilized in the art. For instance, as one example, the base metal may be a steel. The steel may be a carbon steel, an alloy steel, a stainless steel, or a tool steel. In one embodiment, the steel may be a carbon steel. In another embodiment, the steel may be an alloy steel. In a further embodiment, the steel may be a stainless steel.

Further, the steel may have a particular iron content (based on mass) and/or carbon content (based on mass). In particular, the steel may have a particular carbon content (based on mass). For instance, the carbon content may be 0.15% or more, such as 0.17% or more, such as 0.2% or more, such as 0.24% or more, such as 0.27% or more, such as 0.3% or more, such as 0.33% or more, such as 0.37% or more, such as 0.4% or more. The carbon content may be 0.7% or less, such as 0.67% or less, such as 0.63% or less, such as 0.6% or less, such as 0.57% or less, such as 0.53% or less, such as 0.5% or less, such as 0.47% or less, such as 0.43% or less, such as 0.4% or less, such as 0.37% or less, such as 0.33% or less, such as 0.3% or less, such as 0.27% or less, such as 0.23% or less.

In addition, the steel may also include one or more further metals, one or more further non-metals, or a mixture thereof. For instance, the steel may be an alloyed steel including one or more further metals (in addition to the iron), one or more further non-metals (in addition to the carbon), one or more metalloids, or a mixture thereof. Alternatively, the steel may be a stainless steel including one or more further metals (in addition to the iron), one or more further non-metals (in addition to the carbon), one or more metalloids, or a mixture thereof.

These may include, but are not limited to, manganese, silicon, phosphorus, sulfur, chromium, molybdenum, nickel, vanadium, titanium, copper, tungsten, boron, antimony, aluminum, cobalt, etc. as well as a combination thereof. The one or more further metals may include, but are not limited to, manganese, chromium, molybdenum, nickel, vanadium, titanium, copper, tungsten, aluminum, cobalt, or a mixture thereof. The one or more further non-metals may include, but are not limited to, phosphorus, sulfur, or a mixture thereof. The one or more metalloids may include, but are not limited to, silicon, boron, antimony, or a mixture thereof.

In one embodiment, the steel may include one or more further metals, one or more metalloids, or a mixture thereof. In particular, the steel may include a mixture of one or more further metals and one or more metalloids. For instance, the one or more further metals may include manganese and the one or more metalloids may include boron. Accordingly, the steel may be referred to as an MnB steel in one embodiment.

In one embodiment, the steel may have a particular manganese content (based on mass). For instance, the manganese content may be 0.5% or more, such as 0.6% or more, such as 0.7% or more, such as 0.8% or more, such as 0.9% or more, such as 1% or more, such as 1.1% or more, such as 1.2% or more, such as 1.3% or more, such as 1.4% or more. The manganese content may be 2% or less, such as 1.9% or less, such as 1.8% or less, such as 1.7% or less, such as 1.6% or less, such as 1.5% or less, such as 1.4% or less, such as 1.3% or less, such as 1.2% or less, such as 1.1% or less, such as 1% or less, such as 0.9% or less, such as 0.8% or less, such as 0.7% or less.

In one embodiment, the steel may have a particular boron content (based on mass). For instance, the boron content may be 2 ppm or more, such as 4 ppm or more, such as 6 ppm or more, such as 8 ppm or more, such as 10 ppm or more, such as 15 ppm or more, such as 20 ppm or more, such as 25 ppm or more, such as 30 ppm or more, such as 35 ppm or more, such as 40 ppm or more. The boron content may be 200 ppm or less, such as 180 ppm or less, such as 160 ppm or less, such as 140 ppm or less, such as 120 ppm or less, such as 100 ppm or less, such as 90 ppm or less, such as 80 ppm or less, such as 70 ppm or less, such as 60 ppm or less, such as 50 ppm or less, such as 45 ppm or less, such as 40 ppm or less, such as 35 ppm or less, such as 30 ppm or less, such as 25 ppm or less, such as 20 ppm or less, such as 15 ppm or less, such as 10 ppm or less.

Accordingly, the steel may be, but is not limited to, a 19 MnB steel, a 20 MnB steel, a 30 MnB steel, a 35 MnB steel, a 39 MnB steel, a 40 MnB steel, a 45 MnB steel, a 27 MnCrB steel, a 33 MnCrB steel, a 39 MnCrB steel. In one particular embodiment, the steel may be a 40 MnB steel. In another particular embodiment, the steel may be a 45 MnB steel.

In one embodiment, the steel may include a further one or more metalloid including silicon. In this regard, the steel may have a particular silicon content (based on mass). For instance, the silicon content may be 0% or more, such as 0.05% or more, such as 0.1% or more, such as 0.15% or more, such as 0.2% or more, such as 0.25% or more, such as 0.3% or more, such as 0.35% or more. The silicon content may be 0.5% or less, such as 0.45% or less, such as 0.4% or less, such as 0.35% or less, such as 0.3% or less, such as 0.25% or less, such as 0.2% or less, such as 0.15% or less, such as 0.1% or less.

The steel may be a tempered steel in one embodiment. For instance, the steel may have a particular microstructure in one embodiment. In one particular embodiment, the steel may be tempered martensite. However, in an alternative embodiment, the steel may be bainite.

In general, it should be understood that the type of base metal, particularly the type of steel, utilized in forming the blade 108 is not necessarily limited by the present disclosure. For instance, the base metal and corresponding steel are not necessarily limited by the iron content and/or carbon content or other metals, non-metals, and/or metalloids. In this regard, any base metal, in particular steel, utilized in forming blades may be used in accordance with the present disclosure.

As indicated above, the rotary cutting implement, such as blade 108, includes a reinforcing layer 150. The reinforcing layer is formed from a reinforcing composition comprising one or more reinforcement particles and a binder metal composition.

The reinforcement particles can be formed from a ceramic or a metal alloy. In this regard, the material of the reinforcement particle is not necessarily limited by the present disclosure. Accordingly, the reinforcement particle material may include, but is not limited to, a carbide, a cobalt alloy, a nickel superalloy, an aluminum oxide, etc. or a mixture thereof. In one embodiment, the reinforcement particle material dn reinforcement particles may include a carbide. The carbide may include a Group IVB, a Group VB, a Group VIB, a Group VIIIB, a Group IIIA, and/or a Group IVA element of the periodic table. In one embodiment, the carbide may be a boron carbide, a silicon carbide, a tungsten carbide, an aluminum carbide, a titanium carbide, a nickel carbide, a chromium carbide, a tantalum carbide, a niobium carbide, a vanadium carbide, or a combination thereof. In one embodiment, the carbide may include a tungsten carbide. In another embodiment, the metal alloy may include a chromium alloy. The chromium alloy may include a cobalt alloy. However, it should be understood that other types of carbides or metal alloys may also be used as the reinforcement particles of the present disclosure.

The ceramic or the metal alloy (e.g., carbide or chromium alloy) may include other metals, non-metals, or metalloids as generally known in the art. For instance, these may include or be selected from, but are not limited to, manganese, silicon, phosphorus, sulfur, chromium, molybdenum, nickel, vanadium, titanium, copper, tungsten, boron, antimony, aluminum, cobalt, etc. as well as a combination thereof.

In one embodiment, the reinforcement particles may comprise a carbide in an amount of 50 wt.% or more, such as 55 wt.% or more, such as 60 wt.% or more, such as 65 wt.% or more, such as 70 wt.% or more, such as 75 wt.% or more, such as 80 wt.% or more, such as 85 wt.% or more, such as 90 wt.% or more, such as 93 wt.% or more, such as 95 wt.% or more, such as 98 wt.% or more based on the weight of the reinforcement particles. The reinforcement particles may comprise a carbide in an amount of 100 wt.% or less, such as 99 wt.% or less, such as 98 wt.% or less, such as 97 wt.% or less, such as 95 wt.% or less, such as 90 wt.% or less, such as 85 wt.% or less, such as 80 wt.% or less, such as 75 wt.% or less, such as 70 wt.% or less based on the weight of the reinforcement particles. In one particular embodiment, such carbide may be a tungsten carbide.

The shape or form of the reinforcement particles is not necessarily limited by the present disclosure. For instance, the shape or form of the reinforcement particles may be any as generally employed in the art. These may include, but are not limited to, granular, spherical, flake, etc. In one embodiment, the shape or form may be spherical. In another embodiment, the shape or form may be granular. The form of the reinforcement particles may be determined using means generally known in the art.

In this regard, in one embodiment, 50 vol.%, or more, such as 55 vol.%, or more, such as 60 vol.%, or more, such as 65 vol.%, or more, such as 70 vol.%, or more, such as 75 vol.%, or more, such as 80 vol.%, or more, such as 85 vol.%, or more, such as 90 vol.%, or more, such as 95 vol.%, or more, such as 97 vol.%, or more, such as 98 vol.%, or more, such as 99 vol.%, or more of the reinforcement particles may be spherical. Related, 100 vol.% or less, such as 99 vol.% or less, such as 98 vol.% or less, such as 97 vol.% or less, such as 96 vol.% or less, such as 95 vol.% or less, such as 93 vol.% or less, such as 90 vol.% or less, such as 85 vol.% or less, such as 80 vol.% or less, such as 75 vol.% or less of the reinforcement particles may be spherical.

In this regard, in one embodiment, 50 vol.%, or more, such as 55 vol.%, or more, such as 60 vol.%, or more, such as 65 vol.%, or more, such as 70 vol.%, or more, such as 75 vol.%, or more, such as 80 vol.%, or more, such as 85 vol.%, or more, such as 90 vol.%, or more, such as 95 vol.%, or more, such as 97 vol.%, or more, such as 98 vol.%, or more, such as 99 vol.%, or more of the reinforcement particles may be granular. Related, 100 vol.% or less, such as 99 vol.% or less, such as 98 vol.% or less, such as 97 vol.% or less, such as 96 vol.% or less, such as 95 vol.% or less, such as 93 vol.% or less, such as 90 vol.% or less, such as 85 vol.% or less, such as 80 vol.% or less, such as 75 vol.% or less of the reinforcement particles may be granular.

The binder metal composition may include one or more metals. The one or more metals may include, but are not limited to, manganese, chromium, molybdenum, nickel, vanadium, titanium, copper, tungsten, aluminum, cobalt, iron, or a mixture thereof. In one particular embodiment, the one or more metals may include nickel.

The binder metal composition may also include one or more metalloids in some embodiments. The one or more metalloids may include, but are not limited to, silicon, boron, antimony, or a mixture thereof. In one particular embodiment, the one or more metalloids may include silicon.

The binder metal composition may also include one or more non-metals. The one or more non-metals may include, but are not limited to, phosphorus, sulfur, carbon, or a mixture thereof.

In one embodiment, the one or more metals may include at least one transition metal. The transition metal may be ductile transition metal in one embodiment. The transition metal may include, but is not limited to, iron, cobalt, nickel, etc. In one particular embodiment, the binder metal composition, in particular the transition metal, may comprise nickel.

In one embodiment, the binder metal composition may comprise 50 wt.% or more, such as 55 wt.% or more, such as 60 wt.% or more, such as 65 wt.% or more, such as 70 wt.% or more, such as 75 wt.% or more, such as 80 wt.% or more, such as 85 wt.% or more, such as 90 wt.% or more, such as 93 wt.% or more, such as 95 wt.% or more, such as 97 wt.% or more of one or more metals based on the weight of the binder metal composition. In one particular embodiment, the binder metal composition may comprise 50 wt.% or more, such as 55 wt.% or more, such as 60 wt.% or more, such as 65 wt.% or more, such as 70 wt.% or more, such as 75 wt.% or more, such as 80 wt.% or more, such as 85 wt.% or more, such as 90 wt.% or more, such as 93 wt.% or more, such as 95 wt.% or more, such as 97 wt.% or more of one metal based on the weight of the binder metal composition. For instance, such metal may be any of the aforementioned metals. In addition, such metal may be referred to as a primary metal. In one embodiment, such metal may be nickel.

In one embodiment, the binder metal composition may comprise a secondary component including a secondary metal and/or secondary metalloid. Such secondary component may be present in the binder metal composition in an amount of 50 wt.% or less, such as 45 wt.% or less, such as 40 wt.% or less, such as 35 wt.% or less, such as 30 wt.% or less, such as 25 wt.% or less, such as 20 wt.% or less, such as 18 wt.% or less, such as 15 wt.% or less, such as 13 wt.% or less, such as 10 wt.% or less, such as 8 wt.% or less, such as 5 wt.% or less, such as 4 wt.% or less, such as 3 wt.% or less based on the weight of the binder metal composition. Such secondary component may be present in an amount of 0 wt.% or more, such as 0.5 wt.% or more, such as 1 wt.% or more, such as 2 wt.% or more, such as 3 wt.% or more, such as 4 wt.% or more, such as 5 wt.% or more, such as 6 wt.% or more, such as 7 wt.% or more, such as 8 wt.% or more, such as 9 wt.% or more, such as 10 wt.% or more, such as 15 wt.% or more, such as 20 wt.% or more, such as 25 wt.% or more, such as 35 wt.% or more, such as 40 wt.% or more. For instance, such secondary component may be a metal or metalloid as mentioned herein. Such secondary metalloid may be silicon in one embodiment.

In one embodiment, the binder metal composition may comprise a tertiary component including a tertiary metal and/or tertiary metalloid. Such tertiary component may be present in the binder metal composition in an amount of 50 wt.% or less, such as 45 wt.% or less, such as 40 wt.% or less, such as 35 wt.% or less, such as 30 wt.% or less, such as 25 wt.% or less, such as 20 wt.% or less, such as 18 wt.% or less, such as 15 wt.% or less, such as 13 wt.% or less, such as 10 wt.% or less, such as 8 wt.% or less, such as 5 wt.% or less, such as 4 wt.% or less, such as 3 wt.% or less based on the weight of the binder metal composition. Such tertiary component may be present in an amount of 0 wt.% or more, such as 0.5 wt.% or more, such as 1 wt.% or more, such as 2 wt.% or more, such as 3 wt.% or more, such as 4 wt.% or more, such as 5 wt.% or more, such as 6 wt.% or more, such as 7 wt.% or more, such as 8 wt.% or more, such as 9 wt.% or more, such as 10 wt.% or more, such as 15 wt.% or more, such as 20 wt.% or more, such as 25 wt.% or more, such as 35 wt.% or more, such as 40 wt.% or more. For instance, such tertiary component may be a metal or metalloid as mentioned herein.

In general, it should be understood that the binder metal composition may include any single or combination of metals, non-metals, and/or metalloids. In this regard, while the aforementioned provides certain examples and preferred embodiments, it should be understood that other metals, non-metals, and/or metalloids may be used in the binder metal composition in accordance with the present disclosure.

The reinforcement particles may be present in the reinforcing composition in a certain volume %. For instance, the reinforcement particles may be present in the reinforcing composition in an amount of 10 vol.% or more, such as 13 vol.% or more, such as 15 vol.% or more, such as 18 vol.% or more, such as 20 vol.% or more, such as 23 vol.% or more, such as 25 vol.% or more, such as 28 vol.% or more, such as 30 vol.% or more, such as 33 vol.% or more, such as 35 vol.% or more, such as 38 vol.% or more, such as 40 vol.% or more, such as 43 vol.% or more, such as 45 vol.% or more, such as 48 vol.% or more, such as 50 vol.% or more, such as 53 vol.% or more, such as 55 vol.% or more based on the volume of the reinforcing composition. The reinforcement particles may be present in the reinforcing composition in an amount 70 vol.% or less, such as 67 vol.% or less, such as 65 vol.% or less, such as 62 vol.% or less, such as 60 vol.% or less, such as 57 vol.% or less, such as 55 vol.% or less, such as 52 vol.% or less, such as 50 vol.% or less, such as 47 vol.% or less, such as 45 vol.% or less, such as 42 vol.% or less, such as 40 vol.% or less based on the volume of the reinforcing composition. In one embodiment, the aforementioned vol.% may be based on the volume of the reinforcing layer.

The binder metal composition may be present in the reinforcing composition in a certain volume %. For instance, the binder metal composition may be present in the reinforcing composition in an amount of 30 vol.% or more, such as 33 vol.% or more, such as 35 vol.% or more, such as 38 vol.% or more, such as 40 vol.% or more, such as 43 vol.% or more, such as 45 vol.% or more, such as 48 vol.% or more, such as 50 vol.% or more, such as 53 vol.% or more, such as 55 vol.% or more based on the volume of the reinforcing composition. The binder metal composition may be present in the reinforcing composition in an amount 70 vol.% or less, such as 67 vol.% or less, such as 65 vol.% or less, such as 62 vol.% or less, such as 60 vol.% or less, such as 57 vol.% or less, such as 55 vol.% or less, such as 52 vol.% or less, such as 50 vol.% or less, such as 47 vol.% or less, such as 45 vol.% or less, such as 42 vol.% or less, such as 40 vol.% or less based on the volume of the reinforcing composition. In one embodiment, the aforementioned vol.% may be based on the volume of the reinforcing layer.

The reinforcement particles may have a certain Vickers hardness number (HV) as determined in accordance with ASTM E384-22. For instance, the hardness may be 1500 HV or more, such as 1550 HV or more, such as 1600 HV or more, such as 1650 HV or more, such as 1700 HV or more, such as 1750 HV or more, such as 1800 HV or more, such as 1850 HV or more, such as 1900 HV or more, such as 1950 HV or more, such as 2000 HV or more, such as 2050 HV or more, such as 2100 HV or more, such as 2150 HV or more, such as 2200 HV or more, such as 2250 HV or more, such as 2300 HV or more, such as 2350 HV or more, such as 2400 HV or more, such as 2450 HV or more, such as 2500 HV or more. The hardness may be 3500 HV or less, such as 3450 HV or less, such as 3400 HV or less, such as 3350 HV or less, such as 3300 HV or less, such as 3250 HV or less, such as 3200 HV or less, such as 3150 HV or less, such as 3100 HV or less, such as 3050 HV or less, such as 3000 HV or less, such as 2950 HV or less, such as 2900 HV or less, such as 2850 HV or less, such as 2800 HV or less, such as 2750 HV or less, such as 2700 HV or less, such as 2650 HV or less, such as 2600 HV or less, such as 2550 HV or less, such as 2500 HV or less, such as 2450 HV or less, such as 2400 HV or less, such as 2350 HV or less, such as 2300 HV or less, such as 2250 HV or less.

The binder metal composition may also have a certain Vickers hardness number (HV) as determined in accordance with ASTM E384-22. For instance, the hardness may be 200 HV or more, such as 250 HV or more, such as 300 HV or more, such as 350 HV or more, such as 400 HV or more, such as 450 HV or more, such as 500 HV or more, such as 550 HV or more, such as 600 HV or more. The hardness may be 900 HV or less, such as 850 HV or less, such as 800 HV or less, such as 750 HV or less, such as 700 HV or less, such as 650 HV or less, such as 600 HV or less, such as 550 HV or less.

Accordingly, a certain hardness differential may be present between the reinforcement particles and the binder metal composition. For instance, the hardness differential between the reinforcement particles and the binder metal composition may be 1000 HV or more, such as 1050 HV or more, such as 1100 HV or more, such as 1150 HV or more, such as 1200 HV or more, such as 1250 HV or more, such as 1300 HV or more, such as 1350 HV or more, such as 1400 HV or more, such as 1450 HV or more, such as 1500 HV or more, such as 1550 HV or more, such as 1600 HV or more, such as 1650 HV or more, such as 1700 HV or more, such as 1750 HV or more, such as 1800 HV or more, such as 1850 HV or more, such as 1900 HV or more, such as 1950 HV or more, such as 2000 HV or more. The hardness differential may be 2500 HV or less, such as 2450 HV or less, such as 2400 HV or less, such as 2350 HV or less, such as 2300 HV or less, such as 2250 HV or less, such as 2200 HV or less, such as 2150 HV or less, such as 2100 HV or less, such as 2050 HV or less, such as 2000 HV or less, such as 1950 HV or less, such as 1900 HV or less.

The material of the base metal may also have a certain Vickers hardness number (HV), as determined in accordance with ASTM E384-22, such that a hardness differential is present between the base metal and the reinforcement particles. For instance, the hardness differential between the reinforcement particles and the base metal may be 1200 HV or more, such as 1250 HV or more, such as 1300 HV or more, such as 1350 HV or more, such as 1400 HV or more, such as 1450 HV or more, such as 1500 HV or more, such as 1550 HV or more, such as 1600 HV or more, such as 1645 HV or more, such as 1650 HV or more, such as 1700 HV or more, such as 1750 HV or more, such as 1800 HV or more, such as 1850 HV or more, such as 1900 HV or more, such as 1950 HV or more, such as 2000 HV or more. The hardness differential may be 2500 HV or less, such as 2450 HV or less, such as 2400 HV or less, such as 2350 HV or less, such as 2300 HV or less, such as 2250 HV or less, such as 2200 HV or less, such as 2150 HV or less, such as 2100 HV or less, such as 2050 HV or less, such as 2000 HV or less, such as 1950 HV or less, such as 1900 HV or less.

The reinforcing layer may be formed using the reinforcing composition based on means generally known in the art. In this regard, the method of forming the materials of the reinforming composition, the reinforcing composition, as well as the reinforcing layer is not necessarily limited by the present disclosure.

In general, the reinforcing composition and resulting reinforcing layer are bonded to a first side of the base metal used to form the rotary cutting implement, such as the blade. The reinforcing composition may be deposited onto the base metal using techniques generally known in the art. For instance, such deposition may be an electrical deposition. As one example, as the reinforcing composition is deposited, an increased temperature of the first side of the base metal may allow for some of the molecules of the first surface of the base metal to mix with the molecules of the reinforcing composition. In this regard, such mixture may create a heat-affected transition zone. Thereafter, upon cooling, such zone may result in a sufficiently increased bond between the reinforcing composition and resulting reinforcing layer and the base metal of the rotary cutting implement, such as the blade.

The reinforcing layer may also be formed on the base metal using other means generally known in the art. For instance, as one example, laser metal deposition (also referred to as laser cladding or laser hardfacing) may be employed. Using such technique, a laser may be utilized to melt and bond the reinforcing composition, to the base metal or a previously deposited layer. In particular, a laser may be utilized to melt and deposit the reinforcing composition. In some embodiments, the laser may also slightly melt the base metal, allowing the deposited material to blend in and form a metallurgically bonded layer.

The reinforcement layer may also be formed on the base metal using other means generally known in the art. For instance, as another example, hardfacing may be employed. Using such technique, a welding process, including but not limited to shielded metal arc welding, gas metal arc welding, gas tungsten arc welding, plasma arc welding, oxy-acetylene welding, submerged arc welding, or laser welding, is utilized to melt and bond the reinforcing composition to the base metal or a previously deposited layer. For example, a hardfacing process may be utilized to melt and deposit the reinforcing composition. In some embodiments, the hardfacing process may also slightly melt the base metal, allowing the deposited material to blend in and form a metallurgically bonded layer.

### EXAMPLE

### Example 1

The base metal utilized in forming the reinforcing layer on the base metal of the blades was a 40 MnB steel. The reinforcing layer was made from tungsten carbide reinforcement particles and a binder metal composition including 97 wt.% nickel and 3 wt.% silicon. For samples 1-2, the tungsten carbide had a spherical shape, and for samples 3-7, the tungsten carbide had a granular shape. Sample 8 did not include a reinforcing layer. Upon deposition of the reinforcing composition onto the base metal resulting in the formation of the reinforcing layer, a wear test was conducted on the blade and the edge radius was measured.

| No. | Edge Radius after 30min Wear Test (mm) | Vol. % Tungsten Carbide Particles | Carbide Particle Hardness (HV) | Binder Metal Composition Hardness (HV) | Base Metal Hardness (HV) | Hardness Differential - Carbide Particle to Base Metal (HV) | Hardness Differential - Binder Metal Composition to Base Metal (HV) | Hardness Differential - Carbide Particle to Binder Metal Composition (HV) |
|---|---|---|---|---|---|---|---|---|
| 1 | 130.8 | 48.1 | 2295 | 305 | 407 | 1888 | -102 | 1990 |
| 2 | 125.8 | 40 | 2498 | 371 | 411 | 2087 | -40 | 2127 |
| 3 | 214.4 | 46.5 | 2066 | 617 | 349 | 1717 | 268 | 1449 |
| 4 | 236.7 | 38 | 2044 | 563 | 399 | 1645 | 164 | 1481 |
| 5 | 310.4 | 33.7 | 2231 | 454 | 484 | 1747 | -30 | 1777 |
| 6 | 368.8 | 8 | 1703 | 552 | 385 | 1318 | 167 | 1151 |
| 7 | 419.9 | 3 | 2116 | 361 | 537 | 1579 | -176 | 1755 |
| 8 | 421 | 0 | 0 | 0 | 440 | - | - | - |

In general, samples 1-2 demonstrated a very good self-sharpening effect, while samples 3-5 demonstrated a good self-sharpening effect, as indicated by the edge radius upon conclusion of the wear test.

These and further aspects and details of the disclosure are summarized by one or more of the following numbered embodiments:
1. A rotary cutting implement includes an elongated body rotatable about an axis. The elongated body comprises a base metal and has at least one cutting edge. The cutting edge comprises an edge surface extending from a first surface of the elongated body to a second surface of the elongated body. The cutting edge further comprises a reinforcing layer adjacent to the second surface of the elongated body. The reinforcing layer is formed from a reinforcing composition comprising one or more reinforcement particles in an amount of 10 vol.% or more and a binder metal composition wherein a hardness differential between the one or more reinforcement particles and the base metal is 1600 HV or more.
2. The rotary cutting implement of any one or more of the previous embodiments, wherein the at least one cutting edge comprises a first cutting edge and a second cutting edge, wherein the first cutting edge extends along a first side of the elongated body, and the second cutting edge extends along a second side of the elongated body.
3. The rotary cutting implement of any one or more of the previous embodiments, wherein the elongated body comprises a flared portion opposite the at least one cutting edge.
4. The rotary cutting implement of any one or more of the previous embodiments, wherein a ratio of a length of the cutting edge to a length of the reinforcing layer is in a range from about 1:1 to about 1:1.2.
5. The rotary cutting implement of any one or more of the previous embodiments, wherein a ratio of a width of the reinforcing layer to a width of the elongated body is in a range from about 1:3 to about 1:5.
6. The rotary cutting implement of any one or more of the previous embodiments, wherein the elongated body comprises a generally planar central portion, and at least one outer portion disposed radially outward from the generally planar central portion relative to an axis of rotation of the rotary cutting implement, the at least one outer portion extending slightly downward from a plane of the central portion.
7. The rotary cutting implement of any one or more of the previous embodiments, wherein at least a portion of the at least one cutting edge extends along the at least one outer portion.
8. The rotary cutting implement of any one or more of the previous embodiments, wherein at least a portion of the at least one cutting edge extends along the generally planar central portion.
9. The rotary cutting implement of any one or more of the previous embodiments, wherein the reinforcing layer comprises a thickness in a range from about 0.8 mm to about 1.2 mm.
10. The rotary cutting implement of any one or more of the previous embodiments, wherein the reinforcing layer comprises a terminal section having a thickness tapering from a maximum thickness to 0 mm.
11. The rotary cutting implement of any one or more of the previous embodiments, wherein the base metal comprises a steel including manganese and boron.
12. The rotary cutting implement of any one or more of the previous embodiments, wherein the one or more reinforcement particles comprise a carbide.
13. The rotary cutting implement of any one or more of the previous embodiments, wherein the carbide comprises tungsten carbide.
14. The rotary cutting implement of any one or more of the previous embodiments, wherein the binder metal composition comprises nickel.
15. The rotary cutting implement of any one or more of the previous embodiments, wherein the binder metal composition further comprises silicon.
16. The rotary cutting implement of any one or more of the previous embodiments, wherein the one or more reinforcement particles are present in an amount of 30 vol.% or more to 50 vol.% or less.
17. The rotary cutting implement of any one or more of the previous embodiments, wherein the one or more reinforcement particles are present in an amount of 40 vol.% or more to 50 vol.% or less.
18. The rotary cutting implement of any one or more of the previous embodiments, wherein the one or more reinforcement particles have a hardness of 1700 HV or more.
19. The rotary cutting implement of any one or more of the previous embodiments, wherein the one or more reinforcement particles have a hardness of 2250 HV or more
20. The rotary cutting implement of any one or more of the previous embodiments, wherein the hardness differential between the one or more reinforcement particles and the base metal is 1645 HV or more to 2500 HV or less.
21. A lawnmower comprises a mower deck, a power source coupled to the mower deck, a motor selectively powered by the power source, a drive shaft coupled to the motor and defining an axis of rotation, and a blade assembly operatively coupled to the drive shaft. The blade assembly comprises a base and a blade coupled with the base. The blade comprises an elongated body rotatable about the axis of rotation. The elongated body comprises a base metal and has at least one cutting edge extending between a first surface of the elongated body and a second surface of the elongated body. The cutting edge further comprises a reinforcing layer adjacent to the second surface of the elongated body. The reinforcing layer is formed from a reinforcing composition comprising one or more reinforcement particles in an amount of 10 vol.% or more and a binder metal composition wherein a hardness differential between the one or more reinforcement particles and the base metal is 1600 HV or more.
22. The lawnmower of any one or more of the previous embodiment, wherein the first surface of the elongated body is arranged adjacent to the base, and the second surface of the elongated body faces away from the base.
23. The lawnmower of any one or more of the previous embodiments, wherein the blade assembly further comprises a retainer, wherein the blade is disposed between the base and the retainer.
24. The lawnmower of any one or more of the previous embodiments, wherein the elongated body comprises a first opening configured to interface with the base, and at least one second opening configured to interface with the retainer.
25. The lawnmower of any one or more of the previous embodiments, wherein the at least one second opening comprises at least two second openings each having a different shape, whereby the different shapes of the at least two second openings form a poke-yoke feature configured to prevent improper assembly of the blade on the blade assembly.
26. The lawnmower of any one or more of the previous embodiments, wherein the base metal comprises a steel including manganese and boron.
27. The lawnmower of any one or more of the previous embodiments, wherein the one or more reinforcement particles comprise a carbide.
28. The lawnmower of any one or more of the previous embodiments, wherein the carbide comprises tungsten carbide.
29. The lawnmower of any one or more of the previous embodiments, wherein the binder metal composition comprises nickel.
30. The lawnmower of any one or more of the previous embodiments, wherein the binder metal composition further comprises silicon.
31. The lawnmower of any one or more of the previous embodiments, wherein the one or more reinforcement particles are present in an amount of 30 vol.% or more to 50 vol.% or less.
32. The lawnmower of any one or more of the previous embodiments, wherein the one or more reinforcement particles are present in an amount of 40 vol.% or more to 50 vol.% or less.
33. The lawnmower of any one or more of the previous embodiments, wherein the one or more reinforcement particles have a hardness of 1700 HV or more.
34. The lawnmower of any one or more of the previous embodiments, wherein the one or more reinforcement particles have a hardness of 2250 HV or more
35. The lawnmower of any one or more of the previous embodiments, wherein the hardness differential between the one or more reinforcement particles and the base metal is 1645 HV or more to 2500 HV or less.

This written description uses examples to disclose the present application, including the best mode, and also to enable any person skilled in the art to practice the disclosure, including making and using any devices or systems and performing any incorporated methods. The patentable scope of the disclosure is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal language of the claims.

## Claims

1. A rotary cutting implement comprising:
an elongated body rotatable about an axis, the elongated body comprising a base metal and having at least one cutting edge,
the cutting edge comprising an edge surface extending from a first surface of the elongated body to a second surface of the elongated body,
the cutting edge further comprising a reinforcing layer adjacent to the second surface of the elongated body,
the reinforcing layer formed from a reinforcing composition comprising one or more reinforcement particles in an amount of 10 vol.% or more and a binder metal composition,
wherein a hardness differential between the one or more reinforcement particles and the base metal is 1600 HV or more.

2. The rotary cutting implement of claim 1, wherein the at least one cutting edge comprises a first cutting edge and a second cutting edge, wherein the first cutting edge extends along a first side of the elongated body, and the second cutting edge extends along a second side of the elongated body.

3. The rotary cutting implement of claim 1 or 2, wherein the elongated body comprises a flared portion opposite the at least one cutting edge.

4. The rotary cutting implement of any of claims 1 to 3, wherein a ratio of a length of the cutting edge to a length of the reinforcing layer is in a range from about 1:1 to about 1:2.

5. The rotary cutting implement of any of claims 1 to 4, wherein a ratio of a width of the reinforcing layer to a width of the elongated body is in a range from about 1:3 to about 1:6

6. The rotary cutting implement of any of claims 1 to 5, wherein the elongated body comprises a generally planar central portion, and at least one outer portion disposed radially outward from the generally planar central portion relative to an axis of rotation of the rotary cutting implement, the at least one outer portion extending slightly downward from a plane of the central portion, wherein at least a portion of the at least one cutting edge preferably extends along the at least one outer portion or along the generally planar central portion.

7. The rotary cutting implement of any of claims 1 to 6, wherein the reinforcing layer comprises a thickness in a range from about 0.8 mm to about 1.2 mm.

8. The rotary cutting implement of any of claims 1 to 7, wherein the reinforcing layer comprises a terminal section having a thickness tapering from a maximum thickness to 0 mm.

9. The rotary cutting implement of any of claims 1 to 8, wherein the base metal comprises a steel including manganese and boron.

10. The rotary cutting implement of any of claims 1 to 9, wherein the one or more reinforcement particles comprise a carbide, wherein the carbide preferably comprises tungsten carbide.

11. The rotary cutting implement of any of claims 1 to 10, wherein the binder metal composition comprises nickel, wherein the binder metal composition preferably further comprises silicon.

12. The rotary cutting implement of any of claims 1 to 11, wherein the one or more reinforcement particles are present in an amount of 30 vol.% or more to 50 vol.% or less, preferably in an amount of 40 vol.% or more to 50 vol.% or less.

13. The rotary cutting implement of any of claims 1 to 12, wherein the one or more reinforcement particles have a hardness of 1700 HV or more, preferably a hardness of 2250 HV or more.

14. The rotary cutting implement of any of claims 1 to 13, wherein the hardness differential between the one or more reinforcement particles and the base metal is 1645 HV or more to 2500 HV or less.

15. A lawnmower comprising:
a mower deck;
a power source coupled to the mower deck;
a motor selectively powered by the power source;
a drive shaft coupled to the motor and defining an axis of rotation; and
a blade assembly operatively coupled to the drive shaft, the blade assembly comprising: a base, and a blade coupled with the base, the blade comprising the rotary cutting implement of any of the previous claims.
